# EUROPÄISCHE PATENTSCHRIFT

(11) **EP 1 334 386 B1**
(45) Veröffentlichungstag und Bekanntmachung des Hinweises auf die Patenterteilung: **02.03.2005**
(21) Anmeldenummer: 01990410.1
(22) Anmeldetag: 13.11.2001
(51) Int. Cl.: G02B 6/12

(54) **ANORDNUNG ZUR STRAHLUMLENKUNG IN LICHTWELLENLEITERSTRUKTUREN**
DEVICE FOR BEAM DEFLECTION IN OPTICAL WAVE GUIDE STRUCTURES
DISPOSITIF DE DEVIATION D'UN RAYONNEMENT DANS DES STRUCTURES A GUIDE D'ONDES OPTIQUES

(30) Priorität: 14.11.2000 DE 10056385
(43) Veröffentlichungstag der Anmeldung: 13.08.2003
(73) Patentinhaber: Fraunhofer-Gesellschaft zur Förderung der angewandten Forschung e.V., 80686 München (DE)
(72) Erfinder: LEDERER, Falk, 07546 Gera (DE); PESCHEL, Ulf, 07743 Jena (DE); WÄCHTER, Christoph, 07743 Jena (DE)
(74) Vertreter: Butenschön, Antje, Dr.
(86) Internationale Anmeldenummer: PCT/EP2001/013128
(87) Internationale Veröffentlichungsnummer: WO 2002/041058

(56) Entgegenhaltungen:
- US-A- 4 932 743
- HAN-BIN LIN ET AL: "DESIGN AND APPLICATION OF VERY LOW-LOSS ABRUPT BENDS IN OPTICAL WAVEGUIDES" IEEE JOURNAL OF QUANTUM ELECTRONICS, IEEE INC. NEW YORK, US, Bd. 30, Nr. 12, 1. Dezember 1994 (1994-12-01), Seiten 2827-2835, XP000482568 ISSN: 0018-9197
- P.J.R. LAYBOURN ET AL.: "Optical coupling between thin films and circular fibres" ELECTRONICS LETTERS, Bd. 11, Nr. 1, 9. Januar 1975 (1975-01-09), Seiten 2-3, XP002197260
- PATENT ABSTRACTS OF JAPAN vol. 009, no. 243 (P-392), 30. September 1985 (1985-09-30) & JP 60 097309 A (MATSUSHITA DENKI SANGYO KK), 31. Mai 1985 (1985-05-31)

## Beschreibung

Die Erfindung betrifft eine Anordnung zur Führung und Umlenkung von Lichtwellen in einer Lichtwellen leitenden Struktur, wobei die Umlenkung der Lichtausbreitung in einem sehr geringen Umlenkungsradius erfolgt.

Zur Umlenkung der Lichtausbreitung in Lichtwellen leitenden Strukturen ist es bekannt, einfache Krümmer, etwa gebogene Streifenwellenleiter, zu verwenden. Hierbei dürfen jedoch die entsprechenden Krümmungsradien nicht zu klein gewählt werden, da sonst starke Verluste auftreten, z.B. durch Abstrahlung aus dem Lichtwellenleiter im Krümmungsbereich oder Rückreflexionen des aus dem Lichtwellenleiter in den Krümmungsbereich eingehenden Lichtes zurück in den Lichtwellenleiter. Mit solchen Krümmern erzielbare Krümmungsradien liegen im Bereich von einigen 10 mm bis etwa 1 mm; bei kleineren Krümmungsradien sind die Dämpfungswerte nicht mehr tolerierbar. Insbesondere sind sehr kleine Krümmungsradien, wie sie etwa im Gebiet der integrierten Optik, z.B. für Interchipverbindungen, benötigt werden, mit einer Größe von weniger als 100 µm, auf diese Weise nicht zu erreichen, da sie zum praktisch totalen Verlust des optischen Signals führen würden.

Um dennoch Krümmer mit derart kleinen Krümmungsradien zu realisieren, wurden bisher drei Lösungskonzepte vorgeschlagen.

Ein erstes Lösungskonzept basiert auf der Steigerung der Indexkontraste der für die Wellenleiter verwendeten Materialien, um die Lichtwellen-Führungseigenschaften der Wellenleiter zu verbessern und so die Verluste in den Krümmern zu senken und damit kleinere Krümmungsradien zu ermöglichen. Nachteile dieses Ansatzes sind die aus den hohen Indexkontrasten resultierenden kleinen Feldprofile. Um einerseits Monomodigkeit im Krümmer zu garantieren, andererseits aber den Anschluß an herkömmliche Fasertechnologie mit relativ großen Modenquerschnitten zu ermöglichen, sind entweder spezielle geformte Wellenleiterquerschnitte, sog. Petermann-Wellenleiter, herzustellen oder es sind zusätzliche Taper erforderlich, welche die Mode vor dem Krümmer komprimieren und danach wieder expandieren, womit der erforderliche Platzaufwand steigt und so dem Zweck der Verkleinerung des Krümmungsradius entgegenwirkt. Die grundsätzliche nachteilige Beschränkung dieses Lösungsansatzes besteht ferner darin, daß die verfügbaren Indexkontraste von solchen Lichtwellen leitenden Materialien, die strukturierbar sind, begrenzt ist. Aus diesem Grunde ist die Realisierung von Krümmern mit einem Krümmungsradius von unter 100 µm auf Grundlage dieses Lösungskonzeptes selbst bei Verwendung aufwendiger Hilfsstrukturen kaum möglich. Dieses Lösungskonzept ist aus G.-L. Bona, et al., Opt. Eng. 37, 3218 (1998), Y. Hibino et al., Proc. OFC '2000, paper WH2-2 (2000) und R.A. Soref, et al., IEEE Journ. Quant. Electron., 27, 1971 (1991), bekannt.

Ein zweites Lösungskonzept sieht vor, den Krümmungsbereich mit einem photonischen Kristall zu umgeben und so die durch Abstrahlung entstehenden Verluste zu unterdrücken. Hierbei sind photonische Kristalle solche zwei zweidimensionale periodische Strukturen, die die Lichtausbreitung durch Bragg-Reflexion in einem bestimmten Frequenzbereich, dem sog. Gap, unterdrükken. Der grundsätzliche Nachteil von auf diesem Lösungskonzept basierten Realisierungen liegt darin, daß zwar die Abstrahlung aus dem Krümmungsbereich unterdrückt wird und damit eine Verlustursache beseitigt wird, jedoch zum Teil erhebliche Verluste durch Rückreflexion des Krümmers, wobei die Rückreflexion sowohl an den Übergängen zwischen dem photonischen Kristall und dem verwendeten Wellenleitermaterial als auch durch die starke Krümmung des Wellenleiters selbst verursacht werden. Außerdem ist bei einer Realisierung der Wellenleiterstruktur in Schichttechnologie, also als Streifenwellenleiter, Abstrahlungsverluste in die dritte Dimension, d.h. nach oben oder unten in Richtung von Substrat oder Cladding, nicht auszuschließen. Dieses Lösungskonzept ist aus A. Mekis et al., Phys. Rev. Lett. 77, 3787 (1996) bekannt.

Ein drittes Lösungskonzept basiert auf der Verwendung von Kombinationen von Wellenleitermaterial mit extrem hohem Indexkontrast, etwa wie Halbleiter gegen Luft und der sorgfältigen Gestaltung rechtwinkliger Wellenleiterecken als Krümmer, wodurch Abstrahlung und Rückreflexion minimiert werden. Dabei sind ausreichende Ergebnisse nur bei Indexkontrasten, die höher sind als sie beispielsweise im sichtbaren Spektralbereich erzielbar sind, zu erreichen; dies stellt den prinzipiellen Nachteil dieses Lösungskonzeptes dar. Dieses Lösungskonzept ist in C. Manolatou et al., Journal of Lightwave Technology 17, 1682 (1999) beschrieben.

Weiterhin offenbart H. Lin et. al., IEEE Journal of Quantum Electronics 30, No. 12, 2827 (1994) eine Anordnung zur Strahlumlenkung in optischen Wellenleitern, welche auf der Ablenkung der Strahlen in einem Mikroprisma basiert.

Aufgabe der vorliegenden Erfindung ist es, eine Anordnung anzugeben, die eine Führung und Umlenkung von Lichtwellen in einer Lichtwellenleiter-Struktur mit einem sehr geringen Krümmungsradius des geführten Lichtstrahles von unter 100 µm, also insgesamt mit sehr geringer räumlicher Ausdehnung, und mit nur sehr geringen Verlusten durch Rückreflexion oder Abstrahlung bereitzustellen, für deren Funktion nicht besonders hohe Indexkontraste der verwendeten Lichtwellenleitermaterialien erforderlich sind.

Diese Aufgabe wird durch eine Anordnung nach dem Anspruch 1 gelöst.

Dadurch, daß der erste Lichtwellenleiter über eine erste Kopplungsspalte mit dem Kopplungskörper verbunden ist, und der Kopplungskörper einen Brechungsindex nₚ aufweist, der größer ist als der effektive Brechungsindex n_{eff} des ersten und des zweiten Lichtwellenleiters, können Evaneszente Felder die vom ersten Wellenleiter durch den ersten Kopplungsspalt in den Kopplungskörper eintreten, zu einer Abstrahlung einer Welle aus dem ersten Lichtwellenleiter in den Kopplungskörper führen. Dadurch, daß der Winkel α zwisehen den beiden Lichtwellenleitern mit ungefähr 180° - 2 x arccos (n_{eff} geteilt durch nₚ) mit n_{eff} als dem effektiven Brechungsindex der Lichtwellenleiter und mit nₚ als dem Brechungsindex des Kopplungskörpers gewählt ist und der Kopplungskörper durch die erste Kopplungsspalte eine erste Grenzfläche zwischen Kopplungskörper und erstem Lichtwellenleiter und durch die zweite Kopplungsspalte eine zweite Grenzfläche zwischen Kopplungskörper und zweitem Lichtwellenleiter bildet, so kann die aus dem ersten Lichtwellenleiter in den Kopplungskörper ausgekoppelte Welle durch den zweiten Koppelspalt in den zweiten Lichtwellenleiter einkoppeln, d.h., das ursprünglich aus dem ersten Lichtwellenleiter ausgekoppelte Feld regt in analoger Art und Weise eine geführte Mode im zweiten Wellenleiter an.

Es werden so Voraussetzungen geschaffen, eine Umlenkung eines Lichtstrahles um einen Winkel α zu erreichen, wobei Abstrahlungsverluste als auch Verluste durch Rückreflexion in den Eingangswellenleiter minimal sind, und wobei der Ablenkwinkel α in weiteren Bereichen variiert werden kann und um so höher ist, je höher das Verhältnis zwischen dem Brechungsindex nₚ des Kopplungskörpers und dem effektiven Brechungsindex n_{eff} in den Lichtwellenleitern ist. Dabei ist vorteilhaft, daß der Absolutwert beider Größen oder ihr Verhältnis zum Brechungsindex der Umgebung praktisch keine Rolle spielen.

Schon ein Indexkontrast nₘₐₓ/n₀ = 1.42 mit nₘₐₓ als Maximalbrechzahl und mit n₀ als Substratbrechzahl, wie er beispielsweise mit den Grenzwerten für die Siliziumoxinitrit-Wellenleiterherstellung realisierbar ist, erlaubt einen Ablenkwinkel in der Wellenleiterbahn von 90°.

Eine vorteilhafte Ausführungsform sieht vor, den Kopplungskörper als ein Prisma auszuführen. Dies erweist sich als vorteilhaft für die praktische Realisierung als integriertes optisches Bauelement, z.B. in Schichttechnologie als Streifenwellenleiter.

Um eine Reduktion der Übertragungseffizienz, die durch Beugung der Feldverteilung innerhalb des Kopplungskörpers entstehen kann, zu vermeiden, ist es besonders vorteilhaft, die Länge des Kopplungskörpers so zu wählen, daß sie das drei- bis fünffache der die Koppelstärke beschreibenden charakteristischen Länge beträgt. So wird zum einem eine effiziente Überkopplung zwischen Lichtwellenleiter und Kopplungskörper ermöglicht und zum anderen Beugungseffekte der Feldverteilung im Kopplungskörper minimiert. Es wird also die Größe der Gesamtstruktur durch die Koppeleffizienz der Wellenleitermode durch die erste und die zweite Kopplungsspalte bestimmt, denn je schmaler die Kopplungsspalte ist, desto höher ist die Kopplungseffizienz und desto kleiner kann die Gesamtstruktur gewählt werden.

Das skizzierte Funktionsprinzip ist selbst dann noch wirksam, wenn die Länge der Anordnung nur wenige Wellenlängen beträgt. Ferner ist für die Kopplungseffizienz vorteilhaft, wenn der Kopplungskörper eine Ecke aufweist, die von den Lichtwellenleitern eingeschlossen ist und die den Winkel α aufweist; ebenso vorteilhaft für die Übertragungseffizienz ist, den Kopplungskörper so zu gestalten, daß im Bereich der jeweiligen Grenzfläche des Kopplungskörpers mit dem ersten und/oder dem zweiten Lichtwellenleiter Lichtwellenleiter und Kopplungskörper parallel zueinander sind.

Die Ausgestaltung des Kopplungskörpers als Prisma ist insbesondere in Verbindung mit einer mehreckigen vorzugsweise dreieckigen Form der Grundfläche des Prismas vorteilhaft, da die Feldverteilung während ihrer Ausbreitung durch das Prismenmaterial dadurch in einer Richtung am Auseinanderbeugen gehindert wird. Unter Umständen kann auch eine gebogene Form einer Grenzfläche geeignet sein.

Vorzugsweise sind Kopplungsspaltbreite und Prismenkantenlänge so dimensioniert, daß die Koppeleffizienz optimiert und Beugungsverluste im Koppelkörper minimiert sind. Der Koppelspalt ist minimal null, dann wird auch die Koppellänge minimal. Allerdings führt das zu unerwünschten Beugungseffekten im Koppelkörper, d.h. für eine kompakte Strahlumlenkung ist ein Optimum von kurzer Prismenlänge und angepaßtem Koppelspalt zu finden.

Mit Blick auf die praktische Umsetzung in industrieller Produktion ist es vorteilhaft, wenn der erste und der zweite Lichtwellenleiter identische Eigenschaften hinsichtlich Material und Geometrie aufweisen, der erste und/oder der zweite Lichtwellenleiter monomodig sind, oder daß der erste und der zweite Lichtwellenleiter Teile derselben Lichtwellenleiterstruktur sind.

Insbesondere können Kopplungskörper und Lichtwellenleiter vorteilhafterweise aus dem gleichen Material bestehen und das Verhältnis von effektivem Index der Mode im Lichtwellenleiter und dem Brechungsindex des Kopplungskörpers durch die Dimensionierung des Wellenleiters bestimmt sein, wodurch sich die Anordnung besonders einfach in konventioneller Schichttechnologie realisieren läßt.

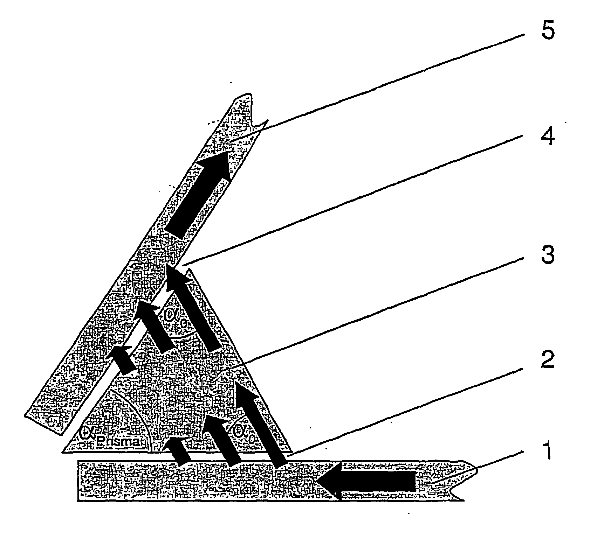

Im folgenden wird die Erfindung anhand eines konkreten Ausführungsbeispiels und einer Figur erläutert. Es zeigt
- Fig. 1: den schematischen Ausbau einer erfindungsgemäßen Anordnung mit einem dreieckigen Prismenkörper als Kopplungskörper und je einem Eingangs- und Ausgangslichtwellenleiter.

Im einem ersten Lichtwellenleiter 1, dem Eingangslichtwellenleiter, wird eine Lichtwelle herangeführt, die der vorbestimmten Mode des monomodigen Eingangslichtwellenleiters entspricht. Aus dem Eingangslichtwellenleiter 1 treten Evaneszente Felder durch den Koppelspalt 2 in den als dreieckiges Prisma ausgeführten Kopplungskörper 3. Im Bereich der Grenzfläche, die vom Prisma 3 und vom Eingangslichtwellenleiter 1 gebildet wird, sind Prisma 3 und Eingangslichtwellenleiter 1 parallel zueinander. Die beiden Ecken des dreieckigen Prismas 3, welche nicht von den beiden Lichtwellenleitern 1 und 5 eingeschlossen sind, entsprechen dem Winkel der Wellenauskopplung aus dem Eingangslichtwellenleiter 1, die durch die Evaneszenten Felder verursacht wird. Die von den Lichtwellenleitern 1 und 5 eingeschlossene Prismenspitze hat den Winkel α, der 180° - 2 arccos (n_{eff} geteilt durch nₚ) beträgt, wobei n_{eff} der effektive Index der Mode der monomodigen und identische Eigenschaften aufweisenden Lichtwellenleiter 1 und 5 ist und nₚ der Brechungsindex des Prismas 3 ist und n_{eff} kleiner als nₚ ist.

Die Prismenlänge beträgt etwa 3 bis 5 Koppellängen, um zum einen noch eine effiziente Überkopplung zu ermöglichen und zum anderen Beugungseffekte der Feldverteilung im Prisma zu minimieren. Dabei ist die Koppellänge die charakteristische Länge für die Auskopplung des Feldes aus dem Wellenleiter und ist durch den Imaginärteil des Modenindex einer die Kopplung vermittelnden Leckwelle bestimmt.

Es tritt die aus dem Eingangslichtwellenleiter 1 ausgekoppelte Welle unter dem gleichen Winkel der Auskopplung durch den zweiten Koppelspalt 4 in den Ausgangslichtwellenleiter 5, wobei die Parallelität zwischen Prisma 3 und Ausgangswellenleiter 5 genauso ist wie zwischen dem Prisma 3 und dem Eingangslichtwellenleiter 1. Durch die spezielle Form des Prismas 3 tritt auf dem Weg durch das Prisma keine nennenswerte Beugung auf und es sind Auskoppel- und Einkoppelbedingungen zueinander invers: Es regt das gesamte aus Wellenleiter 1 ausgekoppelte Feld eine geführte Mode in Ausgangswellenleiter 5 an. Sowohl Abstrahlungsverluste als auch Verluste durch Rückreflexion in den Eingangswellenleiter 1 sind minimal. Die Gesamttransmission der Anordnung liegt praktisch bei 100 %.

Der Ablenkwinkel der Gesamtstruktur ist durch α gegeben und ist um so höher, je höher das Verhältnis zwischen dem Prismenindex nₚ und dem effektiven Index der Mode n_{eff} ist. Der Absolutwert beider Größen und/oder ihr Verhältnis zum Brechungsindex der Umgebung spielen praktisch keine Rolle.

Die Realisierung der Anordnung kann in konventioneller Schichttechnologie erfolgen. Die Struktur wird aus einem Schichtstapel, der eine wellenleitende Ebene enthält, geätzt. Das Verhältnis von effektivem Index des Wellenleiters und Prismenindex, das den Ablenkwinkel bestimmt, wird durch eine entsprechende Dimensionierung des Wellenleiters eingestellt. Während der Prismenindex dem Modenindex der Schichtmode entspricht, kann der effektive Index der Streifenwellenleiter 1 und 5 bei entsprechender Reduktion ihrer Querausdehnung bis auf den Substratindex abgesenkt werden. Alternativ kann das Prisma aus einem anderen Material als der Wellenleiter hergestellt werden. Dabei wird zuerst der Wellenleiter aus einem herkömmlichen Schichtsystem herausgeätzt. Danach wird das aus einem anderen Material bestehende Prisma aufgebracht. Der Ablenkwinkel der Struktur wird in diesem Fall durch das Prismenmaterial bestimmt. Eine Anpassung der Wellenleiterdimension ist dabei nicht notwendig. Im obigen Ausführungsbeispiel haben die Wellenleiter identische Eigenschaften, es kann aber auch sinnvoll sein, daß die Wellenleiter nicht identisch sind.

## Patentansprüche

1. Anordnung zum Umlenken eines Strahles von einem ersten in einem zweiten Lichtwellenleiter, umfassend einen ersten Lichtwellenleiter (1) und einen unter einem Winkel α zu diesem verlaufenden zweiten Lichtwellenleiter (5), die beide einen.effekti-ven Brechungsindex n_{eff} zur Führung einer vorbestimmten Mode aufweisen,
und einen
zwischen den beiden Lichtwellenleitern (1, 5) angeordneten Kopplungskörper (3) **dadurch gekennzeichnet, dass** die den Lichtwellenleitern gegenüberliegenden Oberflächen des Kopplungskörpers im wesentlichen parallel zu den Längsachsen der Lichtwellenleiter verlaufen, dass die Oberflächen des Kopplungskörpers von der Oberfläche des ersten und des zweiten Lichtwellenleiters (1, 5) jeweils durch eine erste bzw. eine zweite Kopplungsspalte (2, 4), eine erste bzw. zweite Grenzfläche zwischen dem ersten bzw. zweiten Lichtwellenlei-20 ter (1, 5) und dem Kopplungskörper (3) zum Übertritt der Lichtwelle zwischen dem ersten bzw. zweiten Lichtwellenleiter (1, 5) und dem Kopplungskörper (3) bildend, getrennt sind, dass der Kopplungskörper (3) einen Brechungsindex nₚ auf-weist, der größer als der effektive Brechungsindex n_{eff} ist und dass α ungefähr 180° - 2 arccos (n_{eff}/nₚ) beträgt.

2. Anordnung nach Anspruch 1, **dadurch gekennzeich-net, daß** der Kopplungskörper (3) als Prisma ausgeführt ist.

3. Anordnung nach einem der Ansprüche 1 oder 2, **dadurch gekennzeichnet, daß** die Länge der den Lichtwellenleitern gegenüberliegenden Oberflächen des Kopp-lungskörpers das drei- bis fünffache der Koppellänge beträgt.

4. Anordnung nach einem der Ansprüche 1 bis 3, **dadurch gekennzeichnet, daß** der Kopplungskörper (3) eine von den Lichtwellenleitern (1, 5) eingeschlossene Ecke mit dem Winkel α aufweist.

5. Anordnung nach einem der Ansprüche 1 bis 4, **dadurch gekennzeichnet, daß** die Grundfläche des Kopplungskörpers (3) mehreckig ist.

6. Anordnung nach einem der Ansprüche 1 bis 4, **dadurch gekennzeichnet, daß** die Grundfläche des Kopplungskörpers (3) dreieckig ist.

7. Anordnung nach einem der Ansprüche 1 bis 6, **dadurch gekennzeichnet, daß** der Winkel α im Bereich von 180° - 2 arccos (n_{eff}/nₚ) ± 10° liegt.

8. Anordnung nach Anspruch 7, **dadurch gekennzeichnet, daß** der Winkel α gleich 180° - 2 arccos (n_{eff}/nₚ) ist.

9. Anordnung nach einem der Ansprüche 1 bis 8, **dadurch gekennzeichnet, daß** der erste und/oder der zweite Lichtwellenleiter monomodig ist.

10. Anordnung nach einem der Ansprüche 1 bis 9, **dadurch gekennzeichnet, daß** der erste und der zweite Lichtwellenleiter identische Eigenschaften aufweisen.

11. Anordnung nach einem der Ansprüche 1 bis 10, **dadurch gekennzeichnet, daß** der erste und der zweite Lichtwellenleiter Teile derselben Lichtwellenleiter-Struktur sind.

12. Anordnung nach einem der Ansprüche 1 bis 11, **dadurch gekennzeichnet, daß** die Breite der Kopplungsspalte (2, 4) und Kantenlänge des Koppelkörpers so dimensioniert sind, daß die Koppeleffizienz optimiert und Beugungsverluste im Koppelkörper minimiert sind.

13. Anordnung nach einem der Ansprüche 1 bis 12, **dadurch gekennzeichnet, daß** Kopplungskörper (3) und Lichtwellenleiter (1, 5) aus dem gleichen Material bestehen und das Verhältnis von effektivem Index der Mode im Lichtwellenleiter (1, 5) n_{eff} und dem Brechungsindex des Kopplungskörpers (3) nₚ durch die Dimensionierung des Wellenleiters (1, 5) bestimmt ist.

14. Anordnung nach einem der Ansprüche 1 bis 12, **dadurch gekennzeichnet, daß** Kopplungskörper (3) und Lichtwellenleiter (1, 5) aus verschiedenem Material bestehen und das Verhältnis von effektivem Index der Mode im Lichtwellenleiter (1, 5) n_{eff} und dem Brechungsindex des Kopplungskörpers (3) nₚ durch die Auswahl des Materials des Kopplungskörpers bestimmt ist.

15. Anordnung nach einem der Ansprüche 1 bis 14, **dadurch gekennzeichnet, daß** der erste und/oder der zweite Lichtwellenleiter als Streifenwellenleiter ausgeführt ist.

## Claims

1. Arrangement for deflecting a beam from a first optical wave guide into a second one, comprising a first optical wave guide (1) and a second optical wave guide (5) which is positioned at an angle a to the former, both having an effective refractive index n_{eff} for guiding a predetermined mode, and a coupling body (3) positioned between the two wave guides (1, 5),
**characterised in that**
the surfaces of the coupling body that face the optical wave guides lie essentially parallel to the lengthwise axes of the optical wave guides, **in that** the surfaces of the coupling body are separated from the surface of the first and second optical wave guides (1, 5) in each case by a first or second coupling gap (2, 4), forming a first or second interface respectively between the first or second optical wave guide (1, 5) and the coupling body (3) for the transfer of the optical wave between the first or second optical wave guide (1, 5) and the coupling body (3), **in that** the coupling body (3) has a refractive index np which is greater than the effective refractive index n_{eff}, and **in that** α is approximately 180° - 2 arc cos (n_{eff}/nₚ).

2. Arrangement as in Claim 1,
**characterised in that**
the coupling body (3) is made in the form of a prism.

3. Arrangement as in one of Claims 1 or 2,
**characterised in that**
the length of the surfaces of the coupling body that face the optical wave guides is between three and five times greater than the coupling length.

4. Arrangement as in one of Claims 1 to 3,
**characterised in that**
the coupling body (3) has a corner enclosed by the optical wave guides (1, 5) with the angle α.

5. Arrangement as in one of Claims 1 to 4,
**characterised in that**
the base of the coupling body (3) is polygonal.

6. Arrangement as in one of Claims 1 to 4,
**characterised in that**
the base of the coupling body (3) is triangular.

7. Arrangement as in one of Claims 1 to 6,
**characterised in that**
the angle α lies within the range of 180° - 2 arc cos (n_{eff}/nₚ)±10°.

8. Arrangement as in Claim 7,
**characterised in that**
the angle α equals 180° - 2 arc cos (n_{eff}/nₚ).

9. Arrangement as in one of Claims 1 to 8,
**characterised in that**
the first and/or second optical wave guide is monomodal.

10. Arrangement as in one of Claims 1 to 9,
**characterised in that**
the first and second optical wave guides have identical properties.

11. Arrangement as in one of Claims 1 to 10,
**characterised in that**
the first and second optical wave guides are part of the same optical wave guide structure.

12. Arrangement as in one of Claims 1 to 11,
**characterised in that**
the width of the coupling gap (2, 4) and the edge length of the coupling body are dimensioned in such a way that the coupling efficiency is optimised and diffraction losses in the coupling body are minimised.

13. Arrangement as in one of Claims 1 to 12,
**characterised in that**
the coupling body (3) and the optical wave guides (1, 5) are made from the same material, and the ratio between the effective index of the mode in the optical wave guide (1, 5) n_{eff} and the refractive index of the coupling body (3) nₚ is determined by the dimensioning of the wave guide (1, 5).

14. Arrangement as in one of Claims 1 to 12,
**characterised in that**
the coupling body (3) and. the optical wave guides (1, 5) are made from different materials, and the ratio between the effective index of the mode in the optical wave guide (1, 5) n_{eff} and the refractive index of the coupling body (3) nₚ is determined by the material selected for the coupling body.

15. Arrangement as in one of Claims 1 to 14,
**characterised in that**
the first and/or second optical wave guide is in the form of a strip line guide.

## Revendications

1. Dispositif pour la déviation d'un rayonnement d'un premier guide d'ondes optiques dans un second guide d'ondes optiques, comprenant un premier guide d'ondes optiques (1) et un second guide d'ondes optiques (5) formant un angle α par rapport au premier, les deux présentant un indice de réfraction n_{eff} efficace pour le guidage d'un mode prédéfini, et un corps de couplage (3) disposé entre les deux guides d'ondes optiques (1, 5), **caractérisé en ce que** les surfaces, opposées aux guides d'ondes optiques, du corps de couplage sont disposées sensiblement parallèlement aux axes longitudinaux des guides d'ondes optiques, **en ce que** les surfaces du corps de couplage sont séparées de la surface du premier et du second guides d'ondes optiques (1, 5) respectivement par une première et une seconde fentes de couplage (2, 4), formant une première et une seconde surfaces limites entre le premier et le second guides d'ondes optiques (1, 5) et le corps de couplage (3) pour le transfert de l'onde lumineuse entre le premier et le second guides d'ondes optiques (1, 5) et le corps de couplage (3), **en ce que** le corps de couplage (3) présente un indice de réfraction nₚ qui est supérieur à l'indice de réfraction n_{eff} efficace et **en ce que** α est d'environ 180° - 2 arccos (n_{eff}/n_{P}).

2. Dispositif selon la revendication 1, **caractérisé en ce que** le corps de couplage (3) est conçu comme prisme.

3. Dispositif selon l'une quelconque des revendications 1 ou 2, **caractérisé en ce que** la longueur des surfaces, opposées aux guides d'ondes optiques, du corps de couplage est égale à trois fois à cinq fois la longueur de couplage.

4. Dispositif selon l'une quelconque des revendications 1 à 3, **caractérisé en ce que** le corps de couplage (3) présente un sommet formé par les guides d'ondes optiques (1, 5) avec l'angle α.

5. Dispositif selon l'une quelconque des revendications 1 à 4, **caractérisé en ce que** la surface de base du corps de couplage (3) est polygonale.

6. Dispositif selon l'une quelconque des revendications 1 à 4, **caractérisé en ce que** la surface de base du corps de couplage (3) est triangulaire.

7. Dispositif selon l'une quelconque des revendications 1 à 6, **caractérisé en ce que** l'angle α se situe dans la plage de 180° - 2 arccos (n_{eff}/n_{P}) ± 10°.

8. Dispositif selon la revendication 7, **caractérisé en ce que** l'angle α est égal à 180° - 2 arccos (n_{eff}/n_{P}).

9. Dispositif selon l'une quelconque des revendications 1 à 8, **caractérisé en ce que** le premier et/ou le second guides d'ondes optiques est/sont monomodes.

10. Dispositif selon l'une quelconque des revendications 1 à 9, **caractérisé en ce que** le premier et le second guides d'ondes optiques présentent des propriétés identiques.

11. Dispositif selon l'une quelconque des revendications 1 à 10, **caractérisé en ce que** le premier et le second guides d'ondes optiques sont des parties de la même structure de guide d'ondes optiques.

12. Dispositif selon l'une quelconque des revendications 1 à 11, **caractérisé en ce que** la largeur des fentes de couplage (2, 4) et la longueur d'arête du corps de couplage sont dimensionnées de telle sorte que l'efficacité de couplage est optimisée et les pertes de diffraction dans le corps de couplage sont minimisées.

13. Dispositif selon l'une quelconque des revendications 1 à 12, **caractérisé en ce que** le corps de couplage (3) et les guides d'ondes optiques (1, 5) sont réalisés dans le même matériau et le rapport entre l'indice efficace n_{eff} du mode dans le guide d'ondes optiques (1, 5) et l'indice de réfraction n_{P} du corps de couplage (3) est défini par le dimensionnement du guide d'ondes optiques (1, 5).

14. Dispositif selon l'une quelconque des revendications 1 à 12, **caractérisé en ce que** le corps de couplage (3) et le guide d'ondes optiques (1, 5) sont réalisés dans un matériau différent et le rapport entre l'indice efficace n_{eff} du mode dans le guide d'ondes optiques (1, 5) et l'indice de réfraction np du corps de couplage (3) est défini par le choix du matériau du corps de couplage.

15. Dispositif selon l'une quelconque des revendications 1 à 14, **caractérisé en ce que** le premier et/ou le second guides d'ondes optiques est (sont) conçu(s) comme des guides d'ondes à ruban.
